# EUROPEAN PATENT SPECIFICATION

(11) **EP 3 333 434 B1**
(45) Date of publication and mention of the grant of the patent: **16.09.2020**
(21) Application number: 17206175.6
(22) Date of filing: 08.12.2017
(51) Int. Cl.: F16B 13/12

(54) **WALL FIXINGS**
WANDBEFESTIGUNGEN
FIXATIONS DE PAROI

(30) Priority: 12.12.2016 GB 201621114
(43) Date of publication of application: 13.06.2018
(73) Proprietor: Metex Online Ltd, Gaerwen LL60 6HE (GB)
(72) Inventor: Bamford, Daniel Caspar, Gaerwen, LL60 6HE (GB)
(74) Representative: Hamilton, Alistair

(56) References cited:
- DE-B- 1 500 988
- US-A1- 2009 252 571

## Description

This invention relates to wall fixings. Particularly, but not exclusively, it relates to a method and apparatus for fixing into a structure that comprises multiple materials layers and/or a cavity.

A common structure of wall, often referred to as a "dry-lined" wall, used in residential and commercial buildings comprises a solid structural core, constructed, for example from concrete blocks or bricks; and an outer layer, for example constructed from plasterboard. The outer layer is carried on bodies of gap-filling adhesive or on battens that maintain a distance between the outer layer and the core to create a cavity between them with a typical depth of 5mm to 25mm. In this arrangement, the outer layer is not continuously supported by the core, but spans the distance between adjacent adhesive bodies or battens unsupported.

After construction of a wall, it is not uncommon for a need to arise to fix things to it. In the case of a traditional wall of solid construction, this can be done through use of wall plugs, which, although subject to many detailed improvements, have remained unchanged in their basic principle of operation for many years, starting from the disclosure in GB22680/1911. Such plugs provide a sleeve that is inserted into a pre-formed hole in a wall. A screw is then driven into the sleeve, which is caused to expand radially to provide a gripping force with the wall. The screw can be used as a hanging point for an item or can be used to clamp an item against the wall.

There are two related characteristics of conventional wallplugs, including those disclosed in GB 1 548 650, that make their use in dry-lined walls problematic. First, to grip effectively, at least the expanding part of the plug must be entirely contained within a close-fitting hole in solid material. Second, to provide a firm and stable fixing, the screw, or an item retained by the screw, must be compressed against a solid surface. In the case of a stud wall, the expanding part of the plug must be inserted into a hole in the core, which is behind the outer layer and cavity, and therefore difficult to access. When the screw is tightened, its head, or an object being fastened to the wall, is brought into contact with the outer layer. If this is made from plasterboard, or a similar material, it may not have the strength necessary to resist the force of the tightening screw, with the result that the fixing may be insecure, the outer layer may be damaged or the outer layer may be deflected into the cavity to an unacceptable level.

DE 15 00 988 B discloses a plastic dowel comprising a plastic expansion dowel and a cover cap.

Although expanding fixings have been developed that can grip an inner surface of a plasterboard wall, their effectiveness is limited by the relatively low strength of plasterboard, and they cannot easily be used in the vicinity of a baton or body of adhesive supporting the plasterboard.

Therefore, at present few, if any, existing wall fixings provide a satisfactory and robust fixing for heavy items especially into a wall of dry-lined construction.

An aim of this invention is to provide a fixing that can be used to make a secure and versatile fixing to a structure that may comprise multiple material layers and a cavity with a dry-lined wall being a good example of such a structure.

To this end, from a first aspect, the present invention provides a fixing for securing an item to a wall, the fixing comprising:
a tubular plug having an axial bore that extends from an open end, the plug having a gripping portion that is spaced from the open end by a tubular section, the bore of the gripping portion being of diameter lesser than the diameter of the tubular section;
a spacer that is a close sliding fit within the tubular section, but which cannot enter the bore in the gripping portion; and
a fastener that has a shank and a head, wherein the shank can be driven into engagement with the bore of the gripping portion to cause radial expansion thereof, and the head can clamp an object against the spacer to transmit forces through the spacer to the gripping portion.

Such a fixing causes major forces to be resisted at a location remote from the open end, for example allowing forces to be anchored in a core of a dry wall, rather than in the relatively fragile outer layer.

Preferably, at least a portion of the fastener (e.g., a threaded portion in cases in which the fastener is threaded) can pass freely through the spacer. In such embodiments, the portion of the fastener that passes through the spacer may engage with the plug by entering the bore of the gripping portion to cause radial expansion of the gripping portion.

In typical embodiments, the fastener is a threaded fastener, such as a wood screw or a machine screw. Alternatively, it may be unthreaded, such as a nail, which may optionally include formations such as barbs on its outer surface to resist removal.

The spacer is typically tubular, and more specifically, typically shaped as a hollow cylinder. Most usually, it is formed of metal. Alternatively, it may be a pin, a threaded element or other shaped element, typically of metal.

Preferably, a step is formed in the bore of the plug at which the diameter of the bore reduces in a direction away from the open end. The step provides an abutment that limits the extent to which the spacer can enter the bore.

The plug advantageously carries radially projecting formations that can engage with material surrounding the plug. These can help to prevent rotation of the plug during insertion of a threaded fastener. Some or all of these radially projecting formations may be deflectable radially into the plug in the absence of the spacer. Thus, in the latter case, introduction of the spacer into the plug can cause these formations to be urged radially outwardly from the plug.

From a second aspect, this invention provides a method of fixing onto a wall using a fixing embodying the invention from its first aspect, comprising:
a. forming a hole in the wall that is of diameter such that the plug is a tight sliding fit in the hole in the absence of the fastener;
b. inserting the plug into the hole until its free end is nearly flush with the wall;
c. inserting the spacer into the bore of the plug from its free end; and
d. inserting the fastener into the plug.

Such a method has typical application where the wall is of dry-lined construction.

Use of fasteners embodying the invention is not limited to walls of dry-lined construction and may find advantageous use in a wide variety and combination of substrates. These include but are not limited to insulation, wall boards, plastics, composites, ceramics, hemp materials, honeycomb substrates, structural insulated panels, insulated concrete formwork, fibre materials or the like.

The fixing may find advantageous application for the securing of a range of items including furniture units, shelving, sanitary ware, windows, doors, conservatories, staircases, appliances, audio visual equipment and wall cladding. By supporting the load in the underlying material the invention enables substantial objects to be secured without damaging the potentially fragile outer material.

An embodiment of the invention will now be described in detail, by way of example, and with reference to the accompanying drawings, in which:
Figure 1 shows a fastener being an embodiment of the invention secured in a dry-lined wall;
Figure 2 shows a cross section through the fastener of Figure 1;

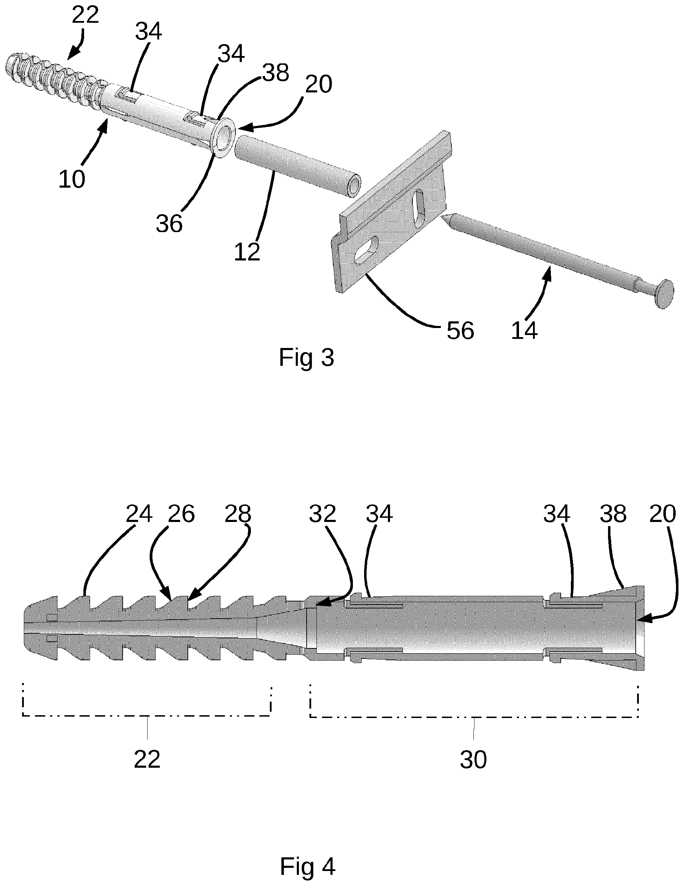

Figure 3 is an exploded view of the fastener of Figure 1; and
Figure 4 is an enlarged cross-section of a plug being a component of the fastener of Figure 1.

With reference to the drawings, a fastener embodying the invention comprises three main components: a plug 10, a spacer 12 and a screw 14.

The plug 10 has similarities to a conventional wall plug, in that it is a tubular moulding of plastic material with one open end at 20 from which a bore extends into the plug. Remote from the open end 20 the plug 10 has a gripping portion 22. Within the gripping portion 22, the bore may taper or remain constant in a direction away from the open end 20. Externally, the gripping portion 22 is formed with circumferentially extending and radially projecting ribs 24, each of which has a leading surface that radially tapers away from the open end 20 and a rear surface that extends approximately radially and faces the open end 20. Remote from the open end, the bore may either be closed or may open at the end of the plug 10.

The material of the plug 10 is selected to provide it with sufficient strength and resilience, and is typically formed from a resin or plastic composite with optional filler such as carbon, glass or other fibres to increase its strength. It might alternatively be formed from metal.

Between the gripping portion 22 and the open end 20 the plug has a tubular section 30. Within the tubular section 30, the bore is of substantially constant diameter, greater than that within the gripping portion. Formed in the tubular section 30 are several gripping fingers 34. Each gripping finger 34 extends longitudinally of the tubular section from a root to a free end, there being a radial projection at the free end. The root of each finger 34 lies closer to the open end 20 than the projection. At the meeting of the gripping portion 22 and the tubular section 30, there is a step change in the diameter of the bore, at which is formed an abutment surface 32 that faces towards the open end 20.

At the open end 20, there is a radially-projecting flange 36. A plurality of radial fins 38 extend from the flange to the outer surface of the tubular section 30.

The spacer 12, in this embodiment, is a hollow cylinder formed of metal with an axial bore. Its outer diameter is such that it is a close sliding fit within the tubular section 30 of the plug 10. Its length is such that when inserted into the bore of the tubular section 30 from the open end 20 to make contact with the abutment surface 32, it extends to the free end 20 such that it has an end surface that is flush with or projects slightly from an outer surface of the flange 36. Optionally (and not shown in the drawings) an end of the spacer 12 may be chamfered to guide it into the bore of the plug 10 and thereby assist assembly of the fastener as discussed below.

The screw 14 in this embodiment is a simple wood screw of diameter and length suitable for the particular application to which it will be put, but it must also be compatible with the plug 10. The screw 14 has a head from which a shank extends to a point. The shank has an external thread that extends from its point at least part-way to the head, optionally leaving a portion adjacent to the head unthreaded. (Note that the thread and the details of the head are omitted from the drawings in the interest of clarity.) The dimensions of the screw are such that its shank can pass freely through the bore of the spacer 12 without making threaded engagement with it. With respect to the plug 10, the dimension of the threaded part of the screw 12 is such that it can make threaded engagement of the bore within the gripping portion 22, and is such that driving the screw into the bore of the gripping portion 22 causes the gripping portion to expand radially.

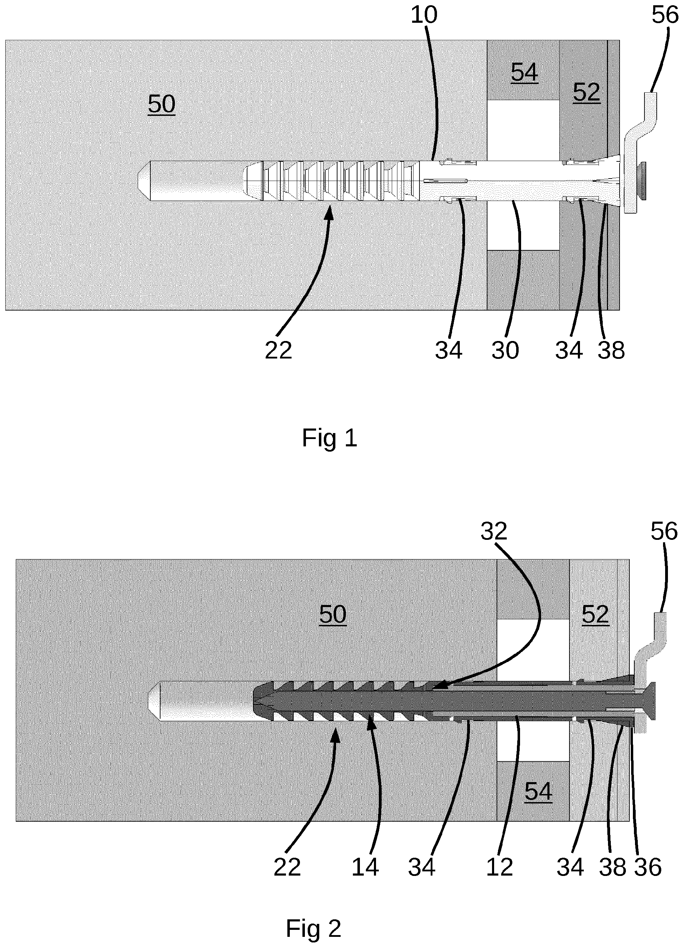

This embodiment is typically used to fix into a dry-lined wall, as shown in Figures 1 and 2, which comprises a structural core 50 normally formed from blocks or bricks, an outer layer 52 normally formed from plasterboard, and spacers 54, in this example batons, which secure the plasterboard 52 at a fixed distance from the core 50, leaving an air gap between the plasterboard 52 and the core 50. It would also work in walls of other types of construction, including, but not limited to, solid walls or dry-lined walls of "dot-and-dab" construction. To deploy the fastener of this embodiment, a hole is drilled into a wall to which an item is to be fixed. The hole passes through the plasterboard 52 into the core 50 and is of diameter such that the plug 10 is a tight sliding fit within it and of depth equal or greater than the length of the plug 10. A particular fastener embodying the invention is selected such that the tubular section 30 extends through the plasterboard 52 into the core 50, with the plug typically being of length in range 20mm to 800mm.

The plug 10 is then inserted into the hole until the flange 36 makes contact with an outer surface of the plasterboard 52. In this position, the fins 38 are forced into the plasterboard 52 in the periphery of the hole, so resisting rotation of the plug 10 within the hole. The projection of each finger 34 makes contact with the material surrounding the hole, which causes the finger 34 to be deflected into the bore. The spacer 12 is then driven into the plug 10 from the open end 20 until it makes contact with the abutment surface 32 within the bore. In doing this, the fingers 34 are urged radially outward by the spacer 12 which causes their projections to be driven into the material of the core 50 and the plasterboard 52, so further resisting rotation of the plug 10 within and removal of the plug 10 from the hole. The screw 14 is then inserted into the bore, in this example, having it shank first being passed through a hole in a bracket 56 that is to be fixed to the wall. The screw 14 can slide into the plug 10 until its tip passes the abutment surface 32. Thereafter, it must be screwed into the bore within the gripping portion 22 until its tip approaches or passes through the end of the plug 10 remote from the open end 20. This causes the gripping portion 22 to expand, forcing the ribs 24 against the periphery of the hole, thereby causing the plug 10 to grip the material of the core 50 thereby preventing its removal.

The following features of this embodiment should be noted. The only radial force applied by the plug 10 to the plasterboard 52 is through expansion of the fingers 34 caused by insertion of the spacer 12; insertion of the screw 14 only causes expansion of the gripping portion 22 within the core 50, which is strong enough to resist its gripping forces. Tightening of the screw 14 clamps the bracket 56 to the spacer 12; therefore, clamping forces are transmitted from the screw head through the bracket 56, onto the spacer 12, which is clamped against the abutment surface 32 and are not reacted by the plasterboard 52. Thus, the major forces are transmitted from the load to the core 50, with relatively low forces being transmitted to the plasterboard 52.

Variations on this embodiment can be made without changing the basic principles of its operation, for example, to adapt to specific applications.

As a first example, the geometry of the gripping portion 22 is described by way of example only and alternative embodiments may incorporate a different arrangement of projections, ribs or similar.

The material of the spacer 12 is selected to provide it with sufficient strength and resilience to act to transfer loads as described above, and is typically formed from metal. It might alternatively be formed from resin, plastic, composite or a combination thereof. The spacer 12 described above is cylindrical, and it will, in variations, typically have a substantially tubular shape. However, it might take other forms, for instance a partially-formed tube, a threaded member, s shaped component, a pin or similar.

A further variation embodiment may allow the screw 14 to have threaded engagement with spacer 12.

## Claims

1. A fixing for securing an item to a wall (50, 52), the fixing comprising:
a. a tubular plug (10) having an axial bore that extends from an open end (20), the plug having a gripping portion (22) that is spaced from the open end by a tubular section (30), the bore of the gripping portion being of diameter lesser than the diameter of the tubular section;
b. a spacer (12) that is a close sliding fit within the tubular section, but which cannot enter the bore in the gripping portion; and
c. a fastener (14) that has a shank and a head, wherein the shank can be driven into engagement with the bore of the gripping portion to cause radial expansion thereof, and the head can clamp an object against the spacer to transmit forces through the spacer to the gripping portion.

2. A fixing according to claim 1 in which at least a portion of the fastener (14) can pass freely through the spacer (12).

3. A fixing according to claim 1 in which the portion of the fastener that passes through the spacer may engage with the plug (10) by entering the bore of the gripping portion (22) to cause radial expansion of the gripping portion.

4. A fixing according to any preceding claim in which the fastener is a threaded fastener, such as a wood screw or a machine screw.

5. A fixing according to any one of claims 1 to 3 in which the fastener is unthreaded, for example in the form of a nail.

6. A fixing according to claim 5 in which the fastener includes barbs on its outer surface to resist removal.

7. A fixing according to any preceding claim in which the spacer (12) is one of a hollow cylinder, a pin or a threaded element.

8. A fixing according to any preceding claim in which a step is formed in the bore of the plug at which the diameter of the bore reduces in a direction away from the open end.

9. A fixing according to claim 8 in which the step provides an abutment (32) that limits the extent to which the spacer can enter the bore.

10. A fixing according to any preceding claim in which the plug carries radially projecting formations (24, 38) that can engage with material (50, 52) surrounding the plug (10).

11. A fixing according to claim 10 in which some or all of the radially projecting formations may be deflectable radially into the plug (10) in the absence of the spacer.

12. A method of fixing onto a substrate using a fixing according to any preceding claim comprising:
a. forming a hole in the wall that is of diameter such that the plug (10) is a tight sliding fit in the hole in the absence of the fastener (14);
b. inserting the plug into the hole until its free end is nearly flush with the wall;
c. inserting the spacer into the bore of the plug from its free end; and
d. inserting the fastener into the plug.

13. A method of fixing according to claim 12 in which the substrate is a wall is of dry-lined construction.

14. A method of fixing according to claim 13 in which the substrate is of two or more material layers (50, 52).

15. A method of fixing according to claim 13 in which the substrate is of two or more material layer s (50, 52) with a cavity between them.

## Patentansprüche

1. Befestigung zum Befestigen eines Gegenstandes an einer Wand (50, 52), wobei die Befestigung Folgendes umfasst:
a. einen röhrenförmigen Dübel (10) mit einer axialen Bohrung, die sich von einem offenen Ende (20) erstreckt, wobei der Dübel einen Greifabschnitt (22) aufweist, der durch einen röhrenförmigen Abschnitt (30) von dem offenen Ende beabstandet ist, wobei die Bohrung des Greifabschnitts einen Durchmesser aufweist, der kleiner als der Durchmesser des röhrenförmigen Abschnitts ist;
b. einen Abstandshalter (12), der eine enge Gleitpassung innerhalb des röhrenförmigen Abschnitts aufweist, der aber nicht in die Bohrung in dem Greifabschnitt eintreten kann; und
c. ein Befestigungselement (14), das einen Schaft und einen Kopf aufweist, wobei der Schaft in Eingriff mit der Bohrung des Greifabschnitts getrieben werden kann, um dessen radiale Erweiterung zu bewirken, und der Kopf einen Gegenstand gegen den Abstandshalter klemmen kann, um Kräfte durch den Abstandshalter auf den Greifabschnitt zu übertragen.

2. Befestigung nach Anspruch 1, wobei zumindest ein Abschnitt des Befestigungselements (14) frei durch den Abstandshalter (12) laufen kann.

3. Befestigung nach Anspruch 1, wobei der Abschnitt des Befestigungselements, der durch den Abstandshalter verläuft, den Dübel (10) in Eingriff nehmen kann, indem er in die Bohrung des Greifabschnitts (22) eintritt, um radiale Erweiterung des Greifabschnitts zu bewirken.

4. Befestigung nach einem vorhergehenden Anspruch, wobei das Befestigungselement ein Gewindebefestigungselement ist, wie beispielsweise eine Holzschraube oder eine Maschinenschraube.

5. Befestigung nach einem der Ansprüche 1 bis 3, wobei das Befestigungselement ohne Gewinde ist, beispielsweise in der Form eines Nagels.

6. Befestigung nach Anspruch 5, wobei das Befestigungselement Widerhaken an seiner Außenfläche beinhaltet, um Entfernung zu widerstehen.

7. Befestigung nach einem vorhergehenden Anspruch, wobei der Abstandshalter (12) eines von einem Hohlzylinder, einem Stift oder einem Gewindeelement ist.

8. Befestigung nach einem vorhergehenden Anspruch, wobei eine Stufe in der Bohrung des Dübels gebildet ist, an der sich der Durchmesser der Bohrung in einer Richtung weg von dem offenen Ende reduziert.

9. Befestigung nach Anspruch 8, wobei die Stufe einen Anschlag (32) bereitstellt, der das Ausmaß begrenzt, in dem der Abstandshalter in die Bohrung eintreten kann.

10. Befestigung nach einem vorhergehenden Anspruch, wobei der Dübel radial vorstehende Formationen (24, 38) trägt, die Material (50, 52), das den Dübel (10) umgibt, in Eingriff nehmen können.

11. Befestigung nach Anspruch 10, wobei einige oder alle der radial vorstehenden Formationen in der Abwesenheit des Abstandshalters radial in den Dübel (10) ablenkbar sein können.

12. Verfahren zum Befestigen auf einem Substrat unter Verwendung einer Befestigung nach einem vorhergehenden Anspruch, umfassend:
a. Bilden eines Lochs in der Wand, das einen Durchmesser aufweist, sodass der Dübel (10) in der Abwesenheit des Befestigungselements (14) eng gleitend in das Loch passt;
b. Einführen des Dübels in das Loch, bis sein freies Ende nahezu bündig mit der Wand ist;
c. Einführen des Abstandshalters in die Bohrung des Dübels von seinem freien Ende; und
d. Einführen des Befestigungselements in den Dübel.

13. Verfahren zum Befestigen nach Anspruch 12, wobei das Substrat eine Trockenbauwand ist.

14. Verfahren zum Befestigen nach Anspruch 13, wobei das Substrat aus zwei oder mehr Materialschichten (50, 52) besteht.

15. Verfahren zum Befestigen nach Anspruch 13, wobei das Substrat aus zwei oder mehr Materialschichten (50, 52) mit einem Hohlraum dazwischen besteht.

## Revendications

1. Fixation permettant de fixer un article sur un mur (50, 52), la fixation comprenant :
a. une cheville tubulaire (10) comportant un alésage axial qui s'étend depuis une extrémité ouverte (20), la cheville possédant une partie de préhension (22) qui est espacée de l'extrémité ouverte par une section tubulaire (30), l'alésage de la partie de préhension possédant un diamètre inférieur au diamètre de la section tubulaire ;
b. un espaceur (12) qui est un ajustement coulissant étroit à l'intérieur de la section tubulaire, mais qui ne peut pas entrer dans l'alésage dans la partie de préhension ; et
c. une attache (14) qui comporte une tige et une tête, ladite tige pouvant être entraînée en prise avec l'alésage de la partie de préhension pour provoquer une expansion radiale de celle-ci, et ladite tête pouvant serrer un objet contre l' espaceur pour transmettre des forces par l'intermédiaire de l'espaceur à la partie de préhension.

2. Fixation selon la revendication 1 dans laquelle au moins une partie de l'attache (14) peut passer librement à travers l'espaceur (12).

3. Fixation selon la revendication 1 dans laquelle la partie d'attache qui passe à travers l'espaceur peut venir en prise avec la cheville (10) en entrant dans l'alésage de la partie de préhension (22) pour provoquer une expansion radiale de la partie de préhension.

4. Fixation selon l'une quelconque des revendications précédentes dans laquelle l'attache est une attache filetée, telle qu'une vis à bois ou une vis mécanique.

5. Fixation selon l'une quelconque des revendications 1 à 3 dans laquelle l'attache n'est pas filetée, par exemple sous la forme d'un clou.

6. Fixation selon la revendication 5 dans laquelle l'attache comprend des ardillons sur sa surface externe pour résister au retrait.

7. Fixation selon l'une quelconque des revendications précédentes dans laquelle l'espaceur (12) est l'un parmi un cylindre creux, une broche ou un élément fileté.

8. Fixation selon l'une quelconque des revendications précédentes dans laquelle un gradin est formé dans l'alésage de la cheville au niveau duquel le diamètre de l'alésage diminue suivant une direction s'éloignant de l'extrémité ouverte.

9. Fixation selon la revendication 8 dans laquelle l'étape fournit une butée (32) qui limite l'étendue dans laquelle l'espaceur peut pénétrer dans l'alésage.

10. Fixation selon l'une quelconque des revendications précédentes dans laquelle la cheville porte des formations en saillie radiale (24, 38) qui peuvent venir en prise avec le matériau (50, 52) entourant la cheville (10).

11. Fixation selon la revendication 10 dans laquelle une partie ou la totalité des formations en saillie radiale peuvent être déviées radialement dans la cheville (10) en l'absence de l'espaceur.

12. Procédé de fixation sur un substrat à l'aide d'une fixation selon l'une quelconque des revendications précédentes comprenant :
a. la formation d'un trou dans la paroi qui possède un diamètre tel que la cheville (10) est un ajustement coulissant serré dans le trou en l'absence de l'attache (14) ;
b. l'insertion du bouchon dans le trou jusqu'à ce que son extrémité libre affleure presque le mur ;
c. l'insertion de l'espaceur dans l'alésage de la cheville à partir de son extrémité libre ; et
d. l'insertion de la fixation dans la cheville.

13. Procédé de fixation selon la revendication 12 dans lequel le substrat est un mur constitué d'une construction à revêtement sec.

14. Procédé de fixation selon la revendication 13 dans lequel le substrat est constitué de deux couches de matériau (50, 52) ou plus.

15. Procédé de fixation selon la revendication 13 dans lequel le substrat est constitué de deux couches de matériau (50, 52) ou plus avec une cavité entre elles.
